# EUROPÄISCHE PATENTSCHRIFT

(11) **EP 1 032 608 B1**
(45) Veröffentlichungstag und Bekanntmachung des Hinweises auf die Patenterteilung: **17.07.2002**
(21) Anmeldenummer: 98954463.0
(22) Anmeldetag: 29.10.1998
(51) Int. Cl.: C08J 3/12, C09D 5/03

(54) **VERFAHREN ZUR HERSTELLUNG VON REAKTIVEN PULVERLACKZUSAMMENSETZUNGEN**
METHOD FOR PRODUCING REACTIVE COATING POWDER COMPOSITIONS
PROCEDE POUR LA PRODUCTION DE COMPOSITIONS REACTIVES DE POUDRE DE REVETEMENT

(30) Priorität: 12.11.1997 DE 19749989
(43) Veröffentlichungstag der Anmeldung: 06.09.2000
(73) Patentinhaber: E.I. DUPONT DE NEMOURS AND COMPANY, Wilmington, Delaware 19898 (US)
(72) Erfinder: KLOSTERMANN, Peter, D-42117 Wuppertal (DE); MAAG, Karin, D-79594 Inzlingen (DE); SAATWEBER, Dietrich, D-42369 Wuppertal (DE); SIMMROCK, Hans-Ulrich, D-42279 Wuppertal (DE); WEIDNER,Eckard, D-44795 Bochum (DE)
(74) Vertreter: Gille Hrabal Struck Neidlein Prop Roos
(86) Internationale Anmeldenummer: EP9806862
(87) Internationale Veröffentlichungsnummer: WO9924493

(56) Entgegenhaltungen:
- EP-A- 0 481 431
- EP-A- 0 661 091
- EP-A- 0 711 586
- EP-A- 0 720 999
- WO-A-92/00342
- WO-A-95/34606
- US-A- 5 548 004

## Beschreibung

Die Erfindung betrifft ein Herstellungsverfahren für pulverförmige Überzugsmittel unter Verwendung einer niedermolekularen inerten Verbindung als Hilfsstoff.

Aus der Vielzahl von bekannten Pulverlack-Herstellungsverfahren finden vor allem die Verfahren breite Anwendungen, bei denen der fertig formulierte Pulverlack in Form einer pastösen Schmelze extrudiert wird und nach Abkühlen der Schmelze und Grobzerkleinerung durch Feinmahlung und nachgeschaltetes Sieben auf gewünschte Kornfeinheit gebracht wird. Insbesondere folgende Verfahrensschritte sind bei farbigen Pulverlacken üblich:
1. Die Bestandteile des Pulverlacks werden als Feststoffe in den erforderlichen Mengenverhältnissen trocken intensiv vorgemischt.
2. Die Mischung wird in einem Extruder bei möglichst niedriger Temperatur zur Vermeidung einer vorzeitigen Vernetzung aufgeschmolzen und intensiv durchmischt. Dabei werden Bindemittel und Härter plastifiziert und benetzen die Pigmente und Füllstoffe.
3. Das erhaltene, gegebenenfalls gefärbte Extrudat wird in eine dünne Schicht ausgewalzt, abgekühlt und in ein grobes Granulat gebrochen.
4. Das Granulat wird in einer Mühle zum fertigen Pulverlack vermahlen. In der Regel wird der im Mahlprozeß nicht vermeidbare Feinanteil < 10 µm in einem anschließenden Sichtungsprozeß entfernt. Das erhaltene Pulver hat typischerweise eine mittlere Partikelgröße von 40 bis 70 µm.

(Vergleiche Ullmanns Enzyklopädie der technischen Chemie, Band 15, Seite 680, 1978, Verlag Chemie Weinheim, sowie Monographie "The Science of powder coatings" Volume 1 und 2 (Herausgeber D. A. Bate, London 1990)). Bei diesen Verfahren kann es zu Schwierigkeiten bzw. aufwendigen nachgeschalteten Arbeiten kommen, insbesondere bezüglich des Extrusionsvorganges und des Mahlvorganges. Bei hoch reaktiven Bindemittelmischungen kann der Extrusionsvorgang zu langsam verlaufen, so daß partielle Gel-Bildung eintritt, welche den Einsatz für Beschichtungen nicht mehr ermöglicht. Eine Limitierung der Verweilzeit im Extruder führt dagegen dazu, daß die Pigmente nicht optimal im Bindemittel dispergiert werden. Diese schlechte Dispergierung führt in der Beschichtung mit Pulverlack zu einer geringeren Deckkraft, die durch einen höheren Anteil an Pigmenten kompensiert werden muß. Der Extrusionsschritt stellt auch im Bezug auf die einsetzbaren Bindemittel eine Limitierung dar, da nur in einem bestimmten Viskositätsbereich gearbeitet werden kann. Beispielsweise können neu entwickelte kristalline Harze, die oberhalb des Schmelzpunktes eine sehr niedrige Schmelzviskosität besitzen und ausgezeichnete Pulverlacke ergeben, nicht im Extruder verarbeitet werden. Auch der Einsatz von Mischungen aus Harzen, die stark unterschiedliche Viskositäten haben, ist im Extruder aufgrund einer schlechten Homogenisierung solcher Systeme nur eingeschränkt möglich. Das beim Vermahlen sich bildende breite Teilchengrößenspektrum liegt beispielsweise im Bereich von 0,1 bis 500 µm und erfordert für spezifische Anwendungszwecke zusätzliche Sieb- und Mahlvorgänge. Darüber hinaus ist das anfallende Feinkorn aus gesundheitlichen und verarbeitungstechnischen Gründen nachteilig.

Weiterhin sind Verfahren zur Herstellung von Pulverlacken bekannt, bei denen Pulverlackschmelzen versprüht werden (DE-A-22 33 138, EP-A-0 537 233). Das Aufschmelzen der Basisharz- und Härterkomponenten kann zu einer thermischen Belastung der Pulverlackzusammensetzung führen. Die Verringerung der Kontaktzeit von Basisharz und Härter im geschmolzenen Zustand ist nur unter großem technischen Aufwand möglich.

Darüber hinaus ist bekannt, zur Herstellung von Pulvern bzw. Pulverlacken niedermolekulare inerte Verbindungen in Form von kompressiblen Fluiden als Hilfsmittel einzusetzen. So werden gemäß EP-A-0 157 827, WO 95/34 606 sowie EP-A-0 720 999 die Komponenten der Pulverzusammensetzung in einem überkritischen Fluid gelöst und die erhaltene Lösung unter Entspannung versprüht. Die durch den Entspannungsvorgang hervorgerufene Abkühlung bewirkt die Bildung der Pulverpartikel. Die Entspannung kann dabei spontan oder zeitabhängig, kontinuierlich oder stufenweise erfolgen. Es können Teilchengrößen von 5 bis 150 µm, aber auch sehr feine Teichen im Bereich von 1 bis 5 µm und weniger durch Einsatz entsprechender Düsen erzielt werden.

Nachteilig bei diesen Verfahren ist, daß die betreffenden Komponenten in überkritischen Fluiden häufig nur wenig löslich sind. Es sind hohe Drücke und große Gasmengen erforderlich, um die Feststoffe in dem überkritischen Fluid aufzulösen.

EP-A-0 669 858 und EP-A-0 661 091 betreffen Herstellungsverfahren für Lackpulver, bei denen die festen Ausgangssubstanzen in dem überkritischen Fluid unter Verfahrensbedingungen nicht löslich sein sollen. Dadurch sollen unter anderem Verluste durch Transport von Ausgangsmaterial aus dem Entspannungsbehälter vermieden werden. Gemäß EP-A-0 669 858 werden die festen Ausgangssubstanzen in dem überkritischen Fluid homogen gemischt und anschließend diese Mischung entspannt, während gemäß EP-A-0 666 091 die Pulverkomponenten aufgeschmolzen und das flüssige Material in einem geeigneten Fluid dispergiert wird.

Bei derartigen Verfahren können Probleme bezüglich der Homogenität der Mischungen auftreten.

Weiterhin sind Verfahren bekannt, bei denen die Pulverherstellung aus lösemittelhaltigen Zusammensetzungen unter Verwendung von kompressiblen Fluiden erfolgt durch Entspannen der Lösung und gleichzeitigem Verdampfen des Lösemittels, beispielsweise EP-A-0 711 586, JP 8-104 830. Die verwendeten Lösemittel sollen partiell mit den Feststoffkomponenten mischbar sein und eine hohe Flüchtigkeitsrate aufweisen.

Der Einsatz organischer Lösemittel und der Aufwand zur Rückgewinnung dieser Lösemittel macht diese Verfahren nachteilig.

Zur Vermeidung von hohen Drücken und Gasmengen sowie der Verwendung von organischem Lösemittel und dem damit verbundenen Aufwand für deren Rückgewinnung wurde gemäß WO 95/21 688 ein Verfahren entwickelt, bei dem das kompressible Fluid in der zu behandelnden Substanymischung unter Druck aufgelöst wird und die Lösung dann entspannt wird. Dazu werden die festen Komponenten aufgeschmolzen und ein geeignetes Fluid darin unter Druck aufgelöst.

Dieses Verfahren bezieht sich auf die Herstellung von Partikeln und Pulvern, beispielsweise Ausgangsprodukte für die Herstellung von Emulgatoren und Detergentien sowie pharmazeutische Wirkstoffe. Werden Mischungen aus verschiedenen Stoffen nach diesem Verfahren verarbeitet, so werden diese Mischungen zunächst hergestellt und dann in den Prozeß eingeschleust. Die Herstellung von reaktiven Pulverlacken wird nicht angesprochen. Eine Mischung von verschiedenen Pulverlackkomponenten aus Basisharzen, Härtern und Pigmenten/Füllstoffen sowie weiteren Lackadditiven kann zu unerwünschten chemischen Reaktionen zwischen Basisharz und Härter führen, die die Eigenschaften der Pulverlackzusammensetzung negativ beeinflussen können.

Aufgabe der Erfindung ist es, ein Verfahren bereitzustellen, welches es ermöglicht, Pulverlacke kontinuierlich oder batchweise in einfacher Weise unter Vermeidung einer starken thermischen Belastung herzustellen. Weiterhin ist Aufgabe der Erfindung die Herstellung homogener Pulverlackzubereitungen durch Versprühen gashaltiger Schmelzen, ohne daß eine vorzeitige chemische Reaktion zwischen den Pulverlackkomponenten stattfindet. Das Verfahren soll homogene Pulverlackpartikel mit einer einstellbaren mittleren Korngröße im Bereich 10 bis 80 µm und einer engen Partikelgrößenverteilung liefern und den Einsatz von Rohstoffen in einem weiten Viskositätsbereich erlauben. Weiterhin soll die Verarbeitung von Pulverlackzusammensetzungen mit niedriger Vernetzungstemperatur möglich sein. Das aufwendige Entfernen von Lösungsmitteln und der Einsatz von hohen Drücken im Vergleich zu herkömmlichen Verfahren soll dabei vermieden werden.

Es hat sich gezeigt, daß die Aufgabe gelöst werden kann durch das den Gegenstand der Erfindung bildende Verfahren zur Herstellung von Pulverlackzubereitungen durch Entspannen einer eine der niedermolekularen inerten Verbindungen Kohlendioxid, Distickstoffoxid, Ammoniak, Stickstoff, Edelgase, Schwefelhexafluorid, Chlortrifluormethan, Monofluormethan, Trifluormonofluorethan, Trifluormethan, Methan, Ethan, Propan, n-Butan, i-Butan, n-Pentan, i-Pentan, Ethen, Propen, Buten, Dimethylether, Diethylether, Dimethylamin, Methanol, Ethanol, Isopropanol, Aceton, Methylethylketon, Methylisopropylketon, Essigsäureethylester sowie Mischungen davon. Beim erfindungsgemäßen Verfahren erfolgt die Freisetzung der niedermolekularen inerten Verbindung als Gas oder Dampf. Beispiele für übliche Lackkomponenten sind Additive und im Fall von gefärbten Pulverlacken, Pigmente, Farbstoffe und gegebenenfalls Füllstoffe. Erfindungsgemäß wird die gesamte Mischung homogenisiert und anschließend die Mischung aller Komponenten entspannt. Beim Entspannen kann sich beispielsweise ein Pulver mit einer mittleren Partikelgröße zwischen 10 und 200 µm und einer engen Partikelgrößenverteilung bilden.

Beim erfindungsgemäßen Verfahren können die Komponenten, insbesondere Basisharz und Härter, getrennt voneinander durch Erwärmen in eine fließfähige Form gebracht werden. Diese Vorgehensweise vermeidet eine vorzeitige Vernetzungsreaktion. Dabei können Pigmente, Füllstoffe und Additive in Mischung mit Basisharz- oder Härterkomponente in eine fließfähige Schmelze überführt werden. Zweckmäßigerweise werden diese mit dem Bindemittel vermischt, da in vielen Fällen der Härter in relativ kleinen Mengen eingesetzt wird. Es ist allerdings auch möglich Pigmente, Füllstoffe und Additive mit der Härterkomponente vorzumischen. Das getrennte Verflüssigen von Basisharz und Härter führt zu einer sehr kurzen Kontaktzeit im Mischerteil des Verfahrens, was zu einer wesentlichen Verringerung einer vorzeitigen Vernetzungsreaktion beiträgt.

Die Zufuhr der niedermolekularen inerten Verbindung vor oder gleichzeitig mit dem Mischvorgang von Härter- und Basisharzkomponenten erfolgt bei solchen Bedingungen, daß sie unter Druck mindestens teilweise in der Mischung oder in mindestens einer der Mischungskomponenten aufgelöst wird. Bei der anschließenden Entspannung wird die niedermolekulare inerte Verbindung freigesetzt und die Erstarrungstemperatur der Pulverlackzubereitung unterschritten. Die gleichzeitige Volumenzunahme der niedermolekularen inerten Verbindung führt zur Bildung von im wesentlichen kugelförmigen Partikeln mit einer engen Partikelgrößenverteilung, die dann isoliert werden können.

Das erfindungsgemäße Verfahren kann, insbesondere bei besonders hochreaktiven Substanzen, variiert werden, indem die niedermolekulare inerte Verbindung bereits vor dem Mischen der Einzelkomponenten vor und/oder während des Aufschmelzens der Einzelkomponenten unter Druck zugeführt wird.

Insbesondere kann bei Pulverlackzusammensetzungen, in denen Basisharz und Härterkomponente eine stark unterschiedliche Viskosität aufweisen, die niedermolekulare inerte Verbindung in einer der Ausgangskomponenten, wie z.B. dem Basisharz, aufgelöst werden und dann mit der zweiten Komponente vermischt werden.

Diese Verfahrensvariante ermöglicht einerseits eine Erniedrigung der zum Erwärmen dieser Komponente benötigten Temperatur dadurch, daß die Schmelzviskosität abgesenkt wird und der Mischvorgang bei niedrigerer Temperatur durchgeführt werden kann. Dies ist bei chemisch hochreaktiven Systemen von Vorteil. Andererseits ist es möglich, auf diese Weise die Viskosität der Komponente vor der Vermischung zu erniedrigen. Dies ist insbesondere bei Pulverlacksystemen mit stark unterschiedlichen Viskositäten von Basisharz und Härterkomponenten von großer Bedeutung, da in diesen Systemen eine homogene Mischung dieser Komponenten im konventionellen Pulverlackherstellungsprozeß schwierig ist. Im erfindungsgemäßen Verfahren ist es möglich die Viskosität beider Komponenten anzugleichen, indem man in der höher viskosen Komponente zunächst die inerte niedermolekulare Komponente auflöst und man damit die Viskosität vor dem Mischvorgang anpassen kann. Dies führt zu einer besseren Homogenisierung im anschließenden Mischvorgang und ergibt einen Pulverlack mit verbesserten Anwendungseigenschaften.

Der im erfindungsgemäßen Verfahren erforderliche Mischvorgang kann so ablaufen, daß beispielsweise die die Pulverlackzusammensetzung bildenden Basisharz- und Härterkomponenten sowie gegebenenfalls Additive, Pigmente und Füllstoffe in einem statischen Mischer unter gleichzeitigem Hinzufügen der inerten niedermolekularen Verbindung gemischt werden. Desweiteren besteht die Möglichkeit, Basisharz- und Härterkomponenten gegebenenfalls unter Zusatz von Additiven erst nach dem getrennten Lösen der inerten Verbindung in der jeweiligen Komponente in einem statischen Mischer zu mischen.

In einer Variante des Verfahrens ist es auch möglich, die komplette Pulverlackmischung bestehend aus Basisharz(en), Härter(n), Additiven, gegebenenfalls Pigmenten und Füllstoffen in einem Extruder kurzzeitig aufzuschmelzen und anschließend die inerte niedermolekulare Verbindung in der Mischung unter Druck aufzulösen. Hierbei kann beispielsweise wiederum ein statischer Mischer eingesetzt werden, der eine bessere Dispergierung der Pigmente in der Pulverlackmischung erlaubt. Bevorzugt beträgt die Verweilzeit im Extruder bei dieser Variante zur Vermeidung einer vorzeitigen Reaktion weniger als 5 Minuten.

Eine weitere Variante des Verfahrens besteht darin, den Pulverlackkomponenten aus Basisharz- und Härterkomponenten sowie gegebenenfalls Additiven, Pigmenten und/oder Füllstoffen vor oder während deren Mischung miteinander und/oder mit der inerten niedermolekularen Verbindung Anteile von Pulverlackabfällen, insbesondere von Pulverlackoverspray aus dem Spritzprozeß, zuzuführen und gemeinsam mit den genannten Komponenten erfindungsgemäß durch Entspannen unter Abkühlung zu verarbeiten.

Gemäß einer weiteren Ausführungsform der Erfindung können Basisharz- und Härterkomponente in der Form von Pulverlackoverspray oder Pulverlackoverspraygemischen eingesetzt werden. Als Basisharz und Härter können somit Pulverlackoverspray oder Pulverlackoverspraygemische verschiedener Zusammensetzung Verwendung finden.

Die niedermolekulare, gegenüber Basisharz- und Härterkomponenten inerte Verbindung wird den Pulverlackkomponenten vor oder nach ihrer Mischung bei Druck- und Temperaturbedingungen zugegeben, die oberhalb oder unterhalb des kritischen Druckes und der kritischen Temperatur einer niedermolekularen gasförmigen Verbindung liegen, so daß eine unter Druck stehende Lösung der niedermolekularen Verbindung in der vorgelegten Substanz bzw. Substanzmischung entsteht. Beispielsweise kann dieser Vorgang eine mittlere Zeitdauer im Bereich von 0,1 Sekunden bis 5 Minuten, bevorzugt 1 Sekunde bis 1 Minute, besonders bevorzugt unter 1 Minute, insbesondere unter 30 Sekunden in Anspruch nehmen.

Die Mischung, die bevorzugt mit der niedermolekularen Verbindung gesättigt ist, wird in einer geeigneten Entspannungsvorrichtung schnell entspannt. Erfindungsgemäß werden Drücke und Temperaturen im Mischer so eingestellt, daß die inerte Verbindung beim Entspannungsvorgang freigesetzt wird und eine Abkühlung bewirkt, die so groß ist, daß die Erstarrungstemperatur der zu behandelnden Pulverlackzubereitung unterschritten werden kann. Die Pulverlackzubereitung wird verfestigt. Durch die starke Volumenzunahme bei der Freisetzung der inerten Verbindung wird die verfestigte Pulverlackzubereitung als feinteiliges Pulver erhalten. Nach dem Abtrennen der Partikel können diese gegebenenfalls fraktioniert werden.

Das Massenverhältnis zwischen der niedermolekularen Verbindung und der Pulverlackzubereitung bzw. den Einzelkomponenten liegt dabei bevorzugt zwischen 0,05 : 1 und 8 : 1, beispielsweise zwischen 0,05 : 1 und 4 : 1, besonders bevorzugt zwischen 0,1 : 1 und 2 : 1 und insbesondere zwischen 0,2 : 1 und 1 : 1.

Um bei der Entspannung die Erstarrungstemperatur der Substanzmischung mindestens zu erreichen und vorzugsweise zu unterschreiten, die bei Pulverlacken üblicherweise zwischen 25 und 70°C liegt, ist es vorteilhaft, wenn bestimmte Druck- und Temperaturverhältnisse vor dem Entspannungsvorgang vorliegen.

Als Erstarrungstemperatur wird die Glasübergangstemperatur der Mischung bei Normaldruck, die mit Hilfe der Differential Scanning Calorimetry (DSC) bestimmt werden kann, angenommen. Da die Glasübergangstemperatur durch das erfindungsgemäße Auflösen der inerten niedermolekularen Verbindung abgesenkt wird, ist es auch möglich, die Mischung unterhalb der Erstarrungstemperatur zu versprühen. Die Differential Scanning Calorimetry (DSC) kann beispielsweise durchgeführt werden, wie in Schwarzl, Polymermechanik 1990, Seite 273 beschrieben.

Ein bevorzugter Temperaturbereich ist der Bereich bis 20°C unter bzw. bis 100°C über der Erstarrungstemperatur bei Normaldruck.

Die Auswahl einer geeigneten inerten Verbindung erfolgt zweckmäßigerweise, nachdem die Erstarrungstemperatur der Substanzmischung bei Normaldruck und der sich daraus ergebende Temperaturbereich für den Betrieb des Mischers ermittelt wurde. Als inerte Verbindung kommen hierbei beispielsweise niedermolekulare Verbindungen in Betracht, die in mindestens einer Komponente der Pulverlackzubereitung löslich sind und die innerhalb des Temperaturbereiches für den Betrieb des Mischers reduzierte Temperaturen von 0,5 bis 2, bevorzugt 0,7 bis 1,7 aufweisen. Die reduzierte Temperatur ist das Verhältnis der Temperatur, bei der der Mischer betrieben wird, zu der kritischen Temperatur der inerten niedermolekularen Verbindung in [K]. Der Druck, unter dem der Mischvorgang durchgeführt wird liegt dabei bevorzugt zwischen 0,5 MPa und 60 MPa, besonders bevorzugt zwischen 0,1 MPa und 35 MPa, insbesondere zwischen 0,3 MPa und 20 MPa.

Als inerte Verbindung kann prinzipiell jeder der genannten inerten niedermolekularen Stoffe bzw. Stoffgemische verwendet werden, insbesondere wenn es bei der Betriebstemperatur des Mischers die vorstehenden Bedingungen hinsichtlich der reduzierten Temperatur und des absoluten Drucks erfüllt und in mindestens einer Komponente der Pulverlackzubereitung löslich ist.

Besonders bevorzugt kommt Kohlendioxid als niedermolekulare Verbindung zum Einsatz.

Für eine Pulverlackzubereitung mit einer Erstarrungstemperatur bei Normaldruck von 45°C kann beispielsweise bei einer Mischertemperatur von 80°C mit Kohlendioxid (kritische Temperatur: 304,3 K, reduzierte Temperatur bei Mischertemperatur 1,16) gearbeitet werden. Bei einer Pulverlackzubereitung mit einer Erstarrungstemperatur bei Normaldruck von 65°C kann bei einer Mischertemperatur von 150°C Methanol (kritische Temperatur: 313,65 K, kritischer Druck 7,89 MPa, reduzierte Temperatur bei Mischertemperatur: 0,82) als inerte Verbindung eingesetzt werden.

Bevorzugt wird zum Mischen der Einzelkomponenten der Pulverlackzubereitung und der inerten, niedermolekularen Komponente ein statischer Mischer eingesetzt. Dieser Mischer ist bevorzugt temperierbar. Alternativ kann auch mit Rühr- oder Schüttelvorrichtungen oder einer sonstigen der Homogenisierung dienenden Vorrichtung, beispielsweise einer Ultraschallquelle oder einer Rotor-Stator-Einrichtung die Ausbildung einer homogenen Mischung erreicht werden. Ferner können homogene Mischungen auch durch geeignete Strömungsführung erzeugt werden, beispielsweise durch Tangentialströmungen, Jetströmungen nach dem Wasserstrahlprinzip oder durch Prallströmung. Die Durchmischungswirkung kann durch überlagerte Druckpulsationen verbessert werden.

Die anschließende Entspannung, z.B. auf Normaldruck, kann auf verschiedene Art und Weise erfolgen. Beispielsweise kann spontan, in einer sehr kleinen Zeitspanne entspannt werden, z.B. in einer Düse, oder es wird innerhalb des Druckbehälters zeitabhängig, beispielsweise in einem Zeitraum zwischen wenigen Sekunden und mehreren Stunden entspannt. Falls notwendig, kann die Lösung vor der Entspannung durch Filtration von mechanischen Verunreinigungen, beispielsweise von Verunreinigungen, die aus dem Pulverlackoverspray stammen, die sich nicht in der inerten Verbindung lösen, befreit werden. Die Filtration kann diskontinuierlich, beispielsweise über Siebe, Gewebe, Filterfasern, Sinterplatten oder bevorzugt kontinuierlich über beispielsweise In-line-Patronenfilter erfolgen.

Ein spontanes Entspannen der Lösung bzw. Mischung aus Pulverlackzubereitung und inerter Verbindung kann beispielsweise erfolgen durch Versprühen in eine vorzugsweise Atmosphärendruck aufweisende Umgebung. Dabei sollen die gebildeten Pulverteilchen unter ihre Glasübergangstemperatur/Erstarrungstemperatur abgekühlt werden, was beispielsweise unter Ausnutzung der Verdampfongsenthalpie der verflüssigten oder überkritischen inerten Verbindung geschehen kann.

Ebenso ist es möglich, die Umgebungstemperatur unterhalb der Glasübergangstemperatur der Pulverlackzusammensetzung zu wählen. Dies kann durch indirekte Kühlung des Sprühgefäßes oder durch direkte Kühlung erreicht werden. Im Falle der direkten Kühlung kann das Sprühgefäß durch Eindüsen von Flüssiggasen oder Gasen gekühlt werden. Die Aufgabe des Kühlmediums kann dabei im Bereich der Entspannungsvorrichtung, am Deckel, am Boden oder an der Wandung bzw. den Wandungen des Sprühgefäßes erfolgen.

Das Versprühen kann mittels einer mit dem Druckbehälter verbundenen Sprühvorrichtung, z.B. Fächerdüse, Vollkegeldüse, Hohlkegeldüse, Zweistoffdüse, Blende, Kapillare, manuell oder automatisch betätigtes Ventil, Düse-Prallplattensystem oder einer rotierenden Scheibe oder einer Rotationsglocke, geschehen. Bevorzugt erfolgt das Versprühen vertikal.

Die Abtrennung der gebildeten Teilchen von Gasstrom erfolgt in bekannter Weise beispielsweise mittels eines Zyklons. Erfindungsgemäß sind die erhaltenen Pulver ohne weitere Behandlung direkt als Pulverlack nutzbar.

Gegebenenfalls können die Teilchen durch nachgeschaltetes Sieben, z.B. über Metallgewebe, in für eine besondere Anwendung geeignete Korngrößenklasse aufgetrennt werden.

Durch geeignete Wahl der Verfahrensparameter wie z.B. Temperatur, Druck, Durchflußrate, Düsenart, Düsendurchmesser, Viskosität, Konzentration der unter Druck stehenden Lösung, kann die Teilchengröße der Pulverlackteilchen beeinflußt werden. Die Teilchen weisen im allgemeinen einen Durchmesser von 1 bis 150 µm auf. Teilchengrößen von 1 bis 100 µm sind bevorzugt, besonders bevorzugt ist eine mittlere Teilchengröße unter 50 µm.

Das erfindungsgemäße Verfahren kann auch unmittelbar in Form eines Pulverbeschichtungsverfahrens durchgeführt werden. Hierbei erfolgt das vorstehend beschriebene Versprühen der unter Druck stehenden Lösung direkt in Richtung auf ein zu beschichtendes Substrat. Nach dem Zerstäuben kühlen sich die gebildeten Pulverlackteilchen noch vor dem Auftreffen auf der Substratoberfläche unter ihre Glasübergangstemperatur ab. Nach dem Beschichten werden die Pulverlackteilchen zum Schmelzen, Verfließen und gegebenenfalls Vernetzen gebracht.

Nach dem erfindungsgemäßen Verfahren lassen sich alle duroplastischen oder auch alle thermoplastischen Pulverlackzusammensetzungen verarbeiten, in denen die ausgewählten, niedermolekularen inerten Verbindungen bei geeigneten Druck- und Temperaturverhältnissen löslich sind.

Unter Basisharz ist die filmbildende Komponente eines Pulverlackes zu verstehen. Geeignet sind beispielsweise übliche für Pulverlacke eingesetzte Basisharze und deren Gemische, beispielsweise Polyesterharze, (Meth)acrylcopolymere, Epoxidharze, Phenolharze, Polyurethanharze, Siloxanharze. Die Basisharze weisen beispielsweise Glasübergangstemperaturen von 30 bis 120°C auf, bevorzugt unter 80°C, und besitzen beispielsweise zahlenmittlere Molmassen (Mn) von 500 bis 20000, bevorzugt unter 10000. Es ist auch möglich, ungesättigte Harze, die z.B. für strahlenhärtende Systeme geeignet sind, einzusetzen. Beispielsweise können auch kristallisationsfähige und semikristalline Polymere zum Einsatz kommen.

Als Härterkomponenten können übliche, dem Fachmann für die Basisharzkomponente geläufige Härter, beispielsweise Amine, Phenolharze, multifunktionelle oligomere Epoxide, niedermolekulare mehrfunktionelle Epoxide wie z.B. Triglycidylisocyanurat und Hydroxyalkylamide eingesetzt werden. Für strahlenhärtende Systeme ist es auch möglich, übliche Initiatoren einzusetzen.

Die Härterkomponenten besitzen beispielsweise zahlenmittlere Molmassen (Mn) von 100 bis 10000, bevorzugt unter 2000.

Die Auswahl der Basisharze und Härter richtet sich nach den miteinander reagierenden funktionellen Gruppen und ist dem Fachmann geläufig. Dabei können gegebenenfalls verschiedene reaktive Gruppen miteinander kombiniert werden. Die Basisharze und Härter können im Mittel mindestens zwei funktionelle Gruppen pro Molekül enthalten. Das Gewichtsverhältnis von Basisharz zu Härter beträgt im allgemeinen beispielsweise 98 : 2 bis 50 : 50. Bevorzugt kann es zwischen 95 : 5 und 70 : 30 liegen. Es können mehrere Basisharze und mehrere Härter im Gemisch vorliegen.

Als Additive können die üblichen Pulverlackadditive zugemischt werden, beispielsweise Verlaufsmittel, Entgasungsmittel, Antioxidantien, Lichtschutzmittel, Mattierungsmittel, Haftvermittler, Gleitmittel, Katalysatoren, rheologiesteuernde Mittel, Additive zur Einstellung der Oberflächenstruktur der Beschichtung.

Das erfindungsgemäße Verfahren ist sowohl zur Herstellung von Pulverklarlacken als auch für gefärbte Pulverlacke geeignet. Für die Erzeugung gefärbter Pulverlacke können alle dem Fachmann bekannten organischen oder anorganischen Pigmente und Farbstoffe eingesetzt werden. Durch Zusatz von Füllstoffen wie z.B. Bariumsulfat oder Calciumcarbonat kann die Deckkraft der Beschichtung erhöht werden und lassen sich die mechanischen und optischen Eigenschaften modifizieren. Die erfindungsgemäß gute Dispergierung der Pigmente und/oder Füllstoffe führt zu gefärbten Pulvern mit ausgezeichneter Deckkraft.

Die erfindungsgemäß hergestellten Pulverlacke können beispielsweise eingesetzt werden als Korrosionsschutz-Überzugsmittel, als dekorative industrielle Beschichtung, z.B. im Bereich von Fassadenbeschichtungen, Büromöbel, Elektrogeräte und Automobilzubehörteile. Die Schichtdicke der Beschichtung kann z.B. zwischen 15 und 200 µm betragen. Insbesondere für Beschichtungen < 50 µm, die mit konventionellen Pulverlacken nur schwierig realisierbar sind, bietet das erfindungsgemäße Verfahren erhebliche Vorteile, da es die Herstellung von Pulvern mit einer mittleren Partikelgröße < 40 µm ermöglicht, die für die Erzielung dieser geringen Schichtdicken erforderlich sind und sich ausgezeichnet nach den für Pulverlacke üblichen Methoden verarbeiten lassen. Die erfindungsgemäß hergestellten Pulverlacke eignen sich ebenfalls als Füller oder Steinschlagsschutzschicht, sowie als Basis- oder Decklacke. Ebenso werden die erfindungsgemäß hergestellten Pulverlacke als Pulverklarlacküberzugsmittel, beispielsweise im Automobilbereich, beispielsweise mit Schichtdicken von 30 bis 150 µm eingesetzt.

Die Applikation des erfmdungsgemäß hergestellten Pulverlackes erfolgt durch übliche Pulverlackapplikationstechniken, beispielsweise Spritzapplikation, Sinterverfahren (wie Tribospritzen, ESTA-unterstütztes Spritzen, ESTA-unterstütztes Wirbelsintern, Bandbeschichtungsverfahren).

Das erfindungsgemäße Verfahren ermöglicht die Herstellung von Pulverlacken in einfacher Weise. Gemeinsames temperaturbelastendes Aufschmelzen von Basisharzund Härterkompönenten und Extrusion können vermieden werden. Mit dem erfindungsgemäßen Verfahren können homogene und feinteilige Pulverlackmischungen ohne aufwendige Mahlprozesse hergestellt werden. Dies wird erreicht durch die mit dem erfindungsgemäßen Verfahren erzielbare Homogenität der Mischung der Pulverlackkomponenten sowie der erzielbaren engen Korngrößenverteilung und der nahezu kugelähnlichen Morphologie der resultierenden Pulverlackteilchen.

Ein besonderer Vorteil des Verfahrens besteht darin, daß die niedermolekulare inerte Verbindung bereits vor und/oder während des Aufschmelzens der Einzelkomponenten zugeführt werden kann. Auf diese Weise kommt es nur zu einer sehr geringen Temperaturbelastung von Basisharz- und Härterkomponenten. Das Verfahren ermöglicht darüber hinaus eine wesentliche Senkung der Kontaktzeit zwischen Basisharz- und Härterkomponenten während des Mischvorganges, so daß ein vorzeitiges Reagieren der Einzelkomponenten untereinander, insbesondere im Fall von hochreaktiven Pulverlackkomponenten, vermieden wird.

Das Verfahren erlaubt den Einsatz von Rohstoffen, welche eine stark unterschiedliche Viskosität aufweisen sowie die Möglichkeit der Vordispergierung von Pigmenten und/oder Füllstoffen im Harz ohne Nebenreaktionen.

Die beigefügten Figuren zeigen beispielhafte Ausführungsvarianten des erfindungsgemäßen Verfahrens.

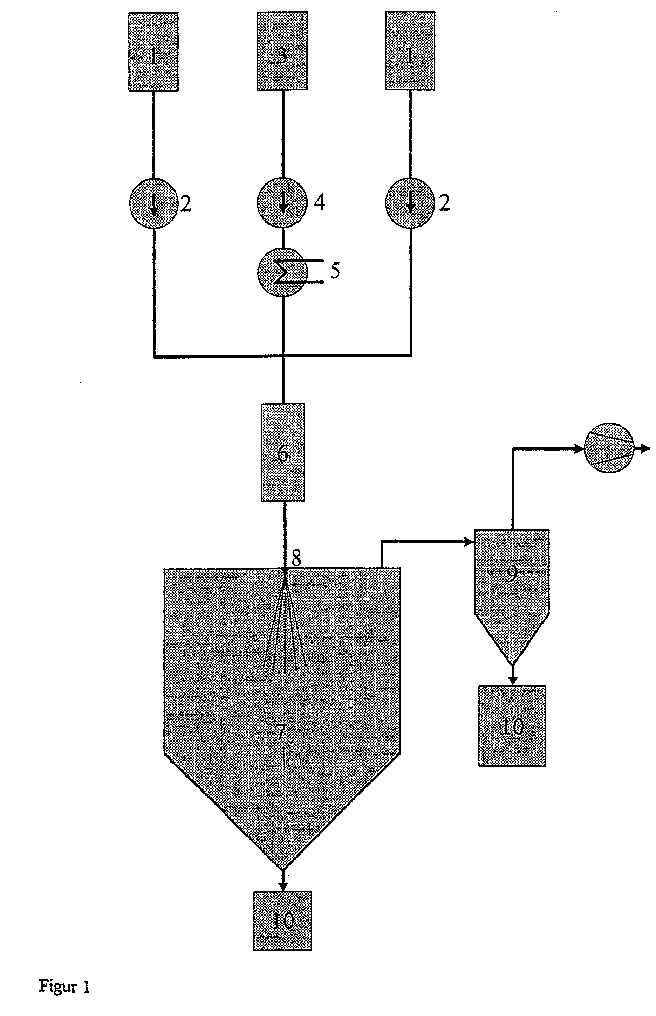

Gemäß dem in Figur 1 dargestellten Beispiel werden in jeweils einem getrennten Vorlagegefäß (1) die Bindemittelkomponente(n) und die Härterkomponente(n) gegebenenfalls unter Zumischung der Additive, Pigmente, Füllstoffe in eines oder beide Vorlagegefäße getrennt aufgeschmolzen und temperiert. Über Pumpvorrichtungen (2) werden die getrennt aufgeschmolzenen Komponenten einer Mischstelle zugeführt. Gleichzeitig wird der Mischstelle die inerte Verbindung zugeleitet, welche aus einer Vorlage (3) über eine Verdichtervorrichtung (4) komprimiert und dann der Mischstelle zugeführt wird. Desweiteren ist ein Wärmetauscher (5) zur Temperaturregulierung der inerten Verbindung angebracht. Der Mischstelle ist ein vorzugsweise temperierbarer Mischer (6) nachgeschaltet, in welchem die homogene Mischung erzeugt wird. Nach Durchlaufen des Mischers (6) gelangt die Lösung/Mischung zum Versprühen in eine Entspannungsvorrichtung (8), beispielsweise Hochdruckdüse, Ventil, Kapillare, Blende, die in den Kopf eines Sprühturmes (7) integriert ist. Um eine Druckabsenkung im Mischer (6) während des Sprühvorganges zu vermeiden, werden kontinuierlich inerte Verbindung sowie die Einzelkomponenten der Pulverlackzubereitung zudosiert. Während der Entspannung entweicht die inerte Verbindung als Gas, und die zu pulverisierende Lackzusammensetzung fällt in Form von Feststoffteilchen aus. Der Sprühturm (7) ist so dimensioniert, daß bevorzugt Partikel mit einem Äquivalentdurchmesser von > 100 µm durch Sedimentation abgeschieden werden. Die Partikel werden in einem Austragsgefäß (10) aufgefangen oder können mit einer geeigneten Vorrichtung kontinuierlich ausgetragen werden. Der von den größeren Partikeln befreite Gasstrom verläßt den Sprühturm (7) am oberen Ende und wird einem Zyklon (9) zugeführt. Der Zyklon ist so dimensioniert, daß bevorzugt Partikel mit einer Größe über 1 µm abgeschieden werden. Die Partikel werden in einem am unteren Ende des Zyklons befestigten Austragsgefäß (10) aufgefangen, oder aus diesem mit einer geeigneten Vorrichtung (Schleuse, Schnecke, Wirbelbett mit Überlauf u.a.) kontinuierlich ausgetragen. Partikel mit einer Größe unter 1 µm können mit Hilfe eines Feinfilters, z.B. eines Elektrofilters aus dem den Zyklon (9) verlassenden Gasstrom herausgefiltert werden. Die inerte Verbindung kann zurückgewonnen und dem Vorlagegefäß (3) erneut zugeführt werden.

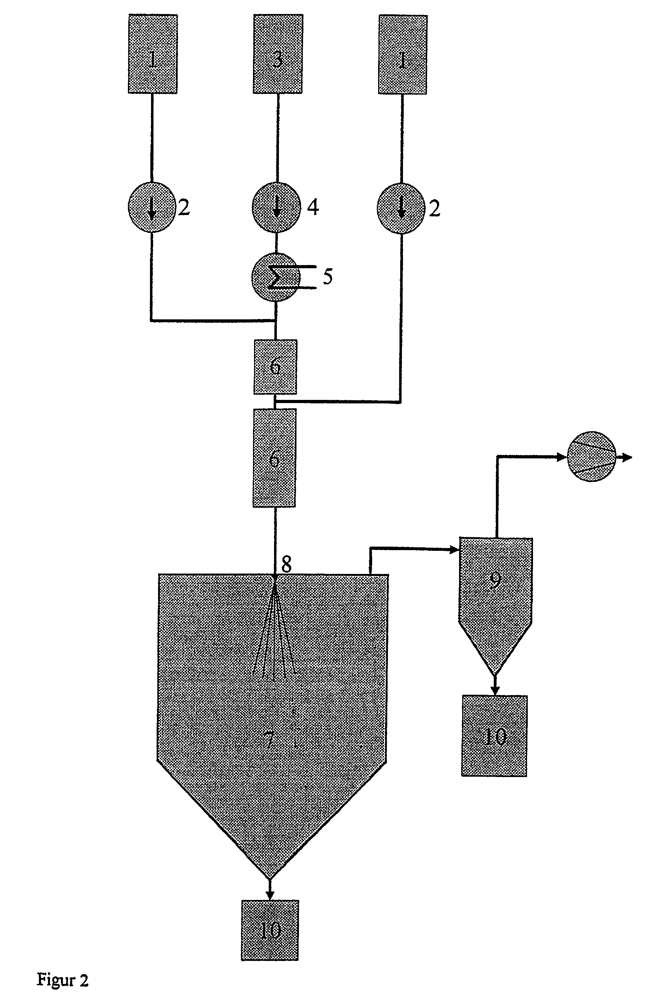

Eine weitere beispielhafte Ausführungsform des Verfahrens ist in Figur 2 gezeigt. Diese Ausführungsform unterscheidet sich von der in Figur 1 gezeigten Ausführungsform dadurch, daß eine der beiden reaktiven Komponenten zunächst mit der inerten Verbindung aus dem Vorlagegefäß (3) in einem Mischer (6) in Kontakt gebracht wird. Vorzugsweise werden die Komponente(n) der Pulverlackzubereitung mit der höheren Viskosität mit der inerten Verbindung vorgemischt. Die Lösung/Mischung aus inerter Verbindung und der/den betreffenden Pulverlackkomponente(n) kann eine erheblich geringere Viskosität als diejenige der reinen Pulverlackkomponente(n) aufweisen. Anschließend wird/werden dieser Mischung/Lösung die weitere(n) Komponenten, die gegebenenfalls auch mit inerter Verbindung versetzt sein können, der Pulverlackzubereitung in einer weiteren Mischstelle zugegeben und in einem Mischer (6) durchmischt. Vorteile dieser Variante sind die einfachere Durchmischung sowie eine weitere Verkürzung der Kontaktzeit der reaktiven Pulverlackkomponenten während des Misch- bzw.
Lösevorgangs. Außerdem kann somit ein Aufschmelzen der betreffenden Pulverkomponente(n) vermieden werden. Die Zugabe einer weiteren Komponente ist in keiner Weise ausgeschlossen. Die Entspannung, Partikelbildung, Abtrennung, Fraktionierung nach Korngröße und der Partikelaustrag unterscheiden sich nicht von der in Figur 1 gezeigten Ausführungsform.

### Beispiel 1:

In einer Anlage entsprechend Figur 1 werden 20 kg eines zur Herstellung von Pulverlacken üblichen Glycidylmethacrylatcopolymers in einer Vorlage bei einer Temperatur von 136°C als Schmelze vorgelegt. In einer weiteren Vorlage werden 5 kg Additol VXL 1381 (Anhydridhärter) als Härterkomponente bei einer Temperatur von 100°C als Schmelze vorgelegt. Die beiden Komponenten werden mit Dosierpumpen einem statischen Mischer (Typ SMX, Fa. Sulzer, Länge 200 mm) zugeführt. Der Massenstrom des Bindemittels beträgt 10 kg/h, derjenige des Härters beträgt 2 kg/h. Im statischen Mischer wird Kohlendioxid der Pulverlackzubereitung zugemischt und zumindest teilweise aufgelöst. Die Temperatur des Kohlendioxid wird so gewählt, daß die Temperatur im statischen Mischer 105°C beträgt. Aus einer Differentialthermoanalyse wird die Erstarrungstemperatur der Pulverlackmischung mit 87°C ermittelt. Der Druck beträgt 110 bar. Der Massenstrom des Kohlendioxids liegt bei 7 kg/h. Nach Durchlaufen des statischen Mischers erfolgt die Entspannung in einer handelsüblichen Hochdruckdüse mit einem Mündungsdurchmesser von 0,8 mm. Die Düse ist in den Deckel eines Sprühturms integriert. Die Temperatur im Sprühturm liegt während des Sprühvorgangs bei 39°C. Das bei der Entspannung freiwerdende Kohlendioxid wird zusammen mit dem Feinanteil des gebildeten Pulvers mittels eines Gebläses abgesaugt und durch einen Zyklon geleitet. Das aus dem Zyklon abgesaugte Gas wird vor dem Durchlaufen des Sauggebläses über einen Papierfeinstfilter geleitet.

Nach einer Sprühzeit von 45 Minuten werden insgesamt 10 kg einer pulverförmigen Pulverlackzubereitung aus Sprühturm (1 kg), Zyklon (8,95 kg) und Feinstfilter (ca. 50 g) entnommen. Die aus dem Zyklon gewonnene Hauptfraktion hat eine mittlere Partikelgröße von 22 µm. Dieses Produkt wird in einer Lackiervorrichtung auf ein Stahlblech nach dem ESTA-Verfahren aufgebracht. Nach Aushärtung bei 130°C wird ein festhaftender, homogener Überzug, mit einer mittleren Schichtdicke von 35 µm erhalten.

### Beispiel 2:

In einer Anlage entsprechend Figur 2 werden 20 kg eines zur Herstellung von Pulverlacken üblichen Glycidylmethacrylatcopolymers in einer Vorlage bei einer Temperatur von 136°C als Schmelze vorgelegt. In einer weiteren Vorlage werden 5 kg Additol VXL 1381 als Härterkomponente bei einer Temperatur von 100°C als Schmelze vorgelegt. Das Bindemittel wird mit einer Dosierpumpe einem ersten statischen Mischer (Typ SMX, Fa. Sulzer, Länge 70 mm) zugeführt. Der Massenstrom des Bindemittels beträgt 10 kg/h. Im ersten statischen Mischer wird Kohlendioxid als inerte Verbindung dem Bindemittel zugemischt und zumindest teilweise aufgelöst. Nach Durchlaufen des ersten statischen Mischers wird der jetzt niedrigviskosen Lösung/Mischung aus Bindemittel und inerte Verbindung die Härterkomponente mit einem Massenstrom von 2 kg/h zugegeben und in einem zweiten statischen Mischer (Typ SMX, Fa. Sulzer, Länge 200 mm) durchmischt. Die Temperatur in diesem Mischer liegt bei 123°C. Der Druck beträgt 105 bar. Der Massenstrom des Kohlendioxids liegt bei 8,2 kg/h. Die Temperatur im Sprühturm ist 44°C. Nach einer Sprühzeit von 30 Minuten werden aus dem Sprühturm 0,75 kg, aus dem Zyklon 5,23 kg und aus dem Feinstfilter 0,02 kg einer pulverförmigen Pulverlackzubereitung entnommen. Die mittlere Partikelgröße der aus dem Zyklon gewonnenen Hauptfraktion beträgt 34 µm. Die Eigenschaften der mit diesem Produkt erzeugten Lackschicht unterscheiden sich nicht von derjenigen in Beispiel 1.

## Patentansprüche

1. Verfahren zur Herstellung von reaktiven Pulverlackzubereitungen durch Entspannen einer eine der niedermolekularen inerten Verbindungen Kohlendioxid, Distickstoffoxid, Ammoniak, Stickstoff, Edelgase, Schwefelhexafluorid, Chlortrifluormethan, Monofluormethan, Trifluormonofluorethan, Trifluormethan, Methan, Ethan, Propan, n-Butan, i-Butan, n-Pentan, i-Pentan, Ethen, Propen, Buten, Dimethylether, Diethylether, Dimethylamin, Methanol, Ethanol, Isopropanol, Aceton, Methylethylketon, Methylisopropylketon, Essigsäureethylester sowie Mischungen davon enthaltenden Zusammensetzung unter Freisetzung der niedermolekularen inerten Verbindung, **dadurch gekennzeichnet, daß** man ein oder mehrere Basisharze und ein oder mehrere Härter für die Basisharze oder ein oder mehrere selbsthärtende Basisharze, sowie gegebenenfalls weitere übliche Lackkomponenten zusammen oder getrennt durch Erwärmen in eine fließfähige Form überführt, zumindest in einer der eingesetzten Basisharz- oder Härter-Komponenten die niedermolekulare inerte Verbindung entweder vor Vereinigung mit den übrigen Komponenten oder in der bereits hergestellten Mischung unter Druck auflöst, die gesamte Mischung in einer Zeit von 0,1 Sekunden bis 5 Minuten homogenisiert und anschließend die Mischung aller Komponenten unter A bkühlung entspannt.

2. Verfahren nach Anspruch 1, **dadurch gekennzeichnet, daß** das Massenverhältnis der niedermolekularen Verbindung zur Pulverlackzubereitung zwischen 0,05 : 1 bis 8: 1 beträgt.

3. Verfahren nach einem der vorhergehenden Ansprüche, **dadurch gekennzeichnet, daß** der Mischvorgang zwischen Pulverlackzubereitung und inerter Verbindung in einem Temperaturbereich von bis zu 20 K unterhalb oder 100 K oberhalb der Erstarrungstemperatur der Pulverlackzubereitung bei Normaldruck durchgeführt wird.

4. Verfahren nach einem der vorhergehenden Ansprüche, **dadurch gekennzeichnet, daß** der Druck, unter dem der Mischvorgang durchgeführt wird, zwischen 0,5 MPa und 60 MPa beträgt.

5. Verfahren nach einem der vorhergehenden Ansprüche, **dadurch gekennzeichnet, daß** die Mischzeit der Komponenten mit der inerten Verbindung unter 1 Minute beträgt.

6. Verfahren nach einem der vorhergehenden Ansprüche, **dadurch gekennzeichnet, daß** die niedermolekulare inerte Verbindung vor dem Mischen in der Komponente mit höherer Viskosität gelöst wird.

7. Verfahren nach einem der vorhergehenden Ansprüche, **dadurch gekennzeichnet, daß** als Basisharze Polyesterharze, (Meth)acrylcopolymere, Epoxidharze, Phenolharze, Polyurethanharze und/oder Siloxanharze eingesetzt werden.

8. Verfahren nach Anspruch 7, **dadurch gekennzeichnet, daß** kristallisationsfähige und/oder semikristalline Basisharze zum Einsatz kommen.

9. Verfahren nach einem der vorhergehenden Ansprüche, **dadurch gekennzeichnet, daß** zusätzlich zu den Basisharzen und Härtern Pulverlackoverspray eingesetzt wird.

10. Verfahren nach einem der Ansprüche 1 bis 8, **dadurch gekennzeichnet, daß** Basisharze und Härter in der Form von Pulverlackoverspray oder Pulverlackoverspray-Gemischen eingesetzt werden.

11. Verfahren nach einem der vorhergehenden Ansprüche, **dadurch gekennzeichnet, daß** es in Form eines Pulverbeschichtungsverfahrens durchgeführt wird, wobei die Entspannung direkt in Richtung eines zu beschichtenden Substrats erfolgt.

12. Pulverlackzubereitung, erhältlich nach dem Verfahren eines der Ansprüche 1 bis 10.

13. Pulverlackzubereitung nach Anspruch 12, bestehend aus Partikeln mit kugelähnlicher Morphologie und einer engen Partikelgrößenverteilung und einer mittleren Partikelgröße von unter 100 µm.

## Claims

1. Method for producing reactive coating powder compositions by decompressing a composition containing one of the low-molecular inert compounds carbon dioxide, dinitrogen oxide, ammonia, nitrogen, noble gases, sulfur hexafluoride, chlorotrifluoromethane, monofluoromethane, trifluoromonofluoroethane, trifluoromethane, methane, ethane, propane, n-butane, i-butane, n-pentane, i-pentane, ethene, propene, butene, dimethyl ether, diethyl ether, dimethylamine, methanol, ethanol, isopropanol, acetone, methyl ethyl ketone, methyl isopropyl ketone, ethyl acetate and mixtures thereof, whereby the low-molecular inert compound is liberated, **characterised in that** one or more base resins and one or more hardeners for the base resins or one or more self-curing base resins and optionally further conventional lacquer components are converted together or separately to a free-flowing form by heating, the low-molecular inert compound in at least one of the base resin or hardener components used is dissolved under pressure either before being combined with the other components or in the prepared mixture, the entire mixture is homogenised in a time of 0.1 seconds to 5 minutes and the mixture of all components is then decompressed with cooling.

2. Method according to claim 1, **characterised in that** the ratio by mass of the low-molecular compound to the coating powder composition is between 0.05 : 1 and 8 : 1.

3. Method according to one of the preceding claims, **characterised in that** the mixing process between coating powder composition and inert compound is performed in a temperature range of up to 20 K below or 100 K above the setting point of the coating powder composition under normal pressure.

4. Method according to one of the preceding claims, **characterised in that** the pressure under which the mixing process is performed is between 0.5 MPa and 60 MPa.

5. Method according to one of the preceding claims, **characterised in that** the mixing time for the components with the inert compound is below 1 minute.

6. Method according to one of the preceding claims, **characterised in that** the low-molecular inert compound is dissolved in the higher-viscosity component before mixing.

7. Method according to one of the preceding claims, **characterised in that** polyester resins, (meth)acrylic copolymers, epoxy resins, phenolic resins, polyurethane resins and/or siloxane resins are used as base resins.

8. Method according to claim 7, **characterised in that** base resins that are capable of crystallisation or semi-crystalline base resins are used.

9. Method according to one of the preceding claims, **characterised in that** coating powder overspray is used in addition to the base resins and hardeners.

10. Method according to one of claims 1 to 8, **characterised in that** base resins and hardeners are used in the form of coating powder overspray or coating powder overspray mixtures.

11. Method according to one of the preceding claims, **characterised in that** it is performed in the form of a powder coating process, whereby decompression is performed directly towards a substrate to be coated.

12. Coating powder composition obtainable by the method according to one of claims 1 to 10.

13. Coating powder composition according to claim 12, consisting of particles having a spherical morphology and a narrow particle size distribution and an average particle size of below 100 µm.

## Revendications

1. Procédé de production de préparations de peinture en poudre réactives, par détente d'une composition contenant l'un des composés inertes à faible masse moléculaire dioxyde de carbone, protoxyde d'azote, ammoniac, azote, gaz rares, hexafluorure de soufre, chlorotrifluorométhane, monofluorométhane, trifluoromonofluoréthane, trifluorométhane, méthane, éthane, propane, n-butane, isobutane, n-pentane, isopentane, éthène, propène, butène, diméthyléther, diéthyléther, diméthylamine, méthanol, éthanol, isopropanol, acétone, méthyléthylcétone, méthylisopropylcétone, acétate d'éthyle, ainsi que les mélanges de ces derniers, par libération du composé inerte à faible masse moléculaire, **caractérisé en ce qu'**on convertit ensemble ou séparément, par chauffage, en une forme fluide, une ou plusieurs résines de base et un ou plusieurs durcisseurs pour les résines de base, ou une ou plusieurs résines de base auto-durcissables, et éventuellement d'autres composants usuels pour peintures et vernis, on dissout sous pression, au moins dans l'un des composants utilisés résine de base ou durcisseur, le composé inerte à faible masse moléculaire, avant combinaison aux autres composants, ou dans le mélange déjà préparé, on homogénéise la totalité du mélange en un laps de temps de 0,1 seconde à 5 minutes, puis on détend le mélange de l'ensemble des composants, tout en refroidissant.

2. Procédé selon la revendication 1, **caractérisé en ce que** le rapport en masse du composé à faible masse moléculaire à la préparation de peinture en poudre est compris entre 0,05:1 et 8:1.

3. Procédé selon l'une des revendications précédentes, **caractérisé en ce que** l'opération de mélange de la préparation de peinture en poudre et du composé inerte s'effectue dans une plage de températures jusqu'à 20 K inférieure ou jusqu'à 100 K supérieure à la température de solidification de la préparation de peinture en poudre sous la pression normale.

4. Procédé selon l'une des revendications précédentes, **caractérisé en ce que** la pression sous laquelle est réalisée l'opération de mélange est comprise entre 0,5 et 60 MPa.

5. Procédé selon l'une des revendications précédentes, **caractérisé en ce que** la durée du mélange des composants et du composé inerte est inférieure à 1 minute.

6. Procédé selon l'une des revendications précédentes, **caractérisé en ce que** le composé inerte à faible masse moléculaire est dissous avant mélange dans le composant ayant une viscosité plus élevée.

7. Procédé selon l'une des revendications précédentes, **caractérisé en ce qu'**on utilise en tant que résines de base des résines de polyester, des copolymères (méth)-acryliques, des résines époxydes, des résines phénoliques, des résines de polyuréthanne et/ou des résines de siloxane.

8. Procédé selon la revendication 7, **caractérisé en ce qu'**on utilise des résines de base cristallisables et/ou semi-cristallines.

9. Procédé selon l'une des revendications précédentes, **caractérisé en ce que**, en plus des résines de base et des durcisseurs, on utilise des peintures en poudre de recouvrement par pistolage.

10. Procédé selon l'une des revendications 1 à 8, **caractérisé en ce que**, en plus des résines de base et des durcisseurs, on utilise des peintures en poudre ou des mélanges de peintures en poudre de recouvrement par pistolage.

11. Procédé selon l'une des revendications précédentes, **caractérisé en ce qu'**il est mis en oeuvre sous forme d'un procédé de revêtement en poudre, la détente s'effectuant directement dans la direction d'un subjectile à revêtir.

12. Préparation de peinture en poudre pouvant être obtenue par le procédé selon l'une des revendications 1 à 10.

13. Préparation de peinture en poudre selon la revendication 12, constituée de particules ayant une morphologie pseudo-sphérique, et une -étroite distribution granulométrique, et une granulométrie moyenne inférieure à 100 µm.
